# EUROPEAN PATENT SPECIFICATION

(11) **EP 2 893 424 B1**
(45) Date of publication and mention of the grant of the patent: **30.12.2020**
(21) Application number: 13835825.4
(22) Date of filing: 10.09.2013
(51) Int. Cl.: G06F 3/041, G06F 3/042

(54) **VALIDATING A PHYSICAL TOUCH EVENT IN OPTICAL TOUCH SCREENS**
VALIDIERUNG EINES PHYSISCHEN BERÜHRUNGSEREIGNISSES AUF OPTISCHEN BERÜHRUNGSBILDSCHIRMEN
VALIDATION D'UN ÉVÉNEMENT DE TOUCHER PHYSIQUE DANS DES ÉCRANS TACTILES OPTIQUES

(30) Priority: 10.09.2012 IL 22186212; 24.10.2012 US 201261717752 P
(43) Date of publication of application: 15.07.2015
(73) Proprietor: Elbit Systems Ltd., 31053 Haifa (IL)
(72) Inventor: AMARILIO, Errikos, 2808355 Kiryat Ata (IL); POTASHNIK, Avishai, 3440001 Haifa (IL)
(74) Representative: Pearl Cohen Zedek Latzer Baratz UK LLP
(86) International application number: PCT/IL2013/050760
(87) International publication number: WO 2014/037951

(56) References cited:
- EP-A1- 1 798 635
- EP-A1- 1 841 187
- EP-A1- 2 182 421
- EP-A1- 2 482 164
- WO-A1-02/35461
- JP-A- H05 143 226
- US-A- 5 510 813
- US-A1- 2008 024 459
- US-A1- 2011 169 765
- US-A1- 2011 181 539
- US-A1- 2012 223 900
- US-B1- 6 504 530

## Description

### BACKGROUND

### 1. TECHNICAL FIELD

The present invention relates to electronic panel displays and more particularly, to such displays with touch sensors.

### 2. DISCUSSION OF THE RELATED ART

Prior to setting forth the background of the invention, it may be helpful to set forth definitions of certain terms that will be used hereinafter.

The term "physical touch event" as used herein refers to an actual physical contact initiated by a user, between a user or an object held by the user, and a display panel. The outcome effect of such an impact may result with any of the following measurable metrics: force/pressure change, bending, deflection, shockwave, acoustic pulse/wave, dispersive signal, and the like.

The term "physical touch sensors" as used herein refers to any type of sensors that are configured to measure any of the aforementioned measurable metrics associated with the various types of the outcome effect of the physical touch event.

The use of touch screens on board airborne platforms has recently become very popular with the introduction of flat panel displays. One form of touch screens is based on optical imaging technology (hereinafter: optical touch screens). Optical touch screens usually include one or more set of optical sensors positions along the circumference of the display. In combination with a processor, the optical sensors determine the spatial position of the hand or finger the user or any object held by the user. By determining an optical touch plane, which is usually parallel to the actual screen, any crossing of that optical touch plane is considered as a touch event. One drawback of the optical touch screen is that the optical touch plane is displaced, from the actual screen and so the optical touch screen detects a touch event before a physical touch event has occurred.

A range of technologies are used today in order to implement touch screen that are based on detecting a physical touch event. Piezoelectric sensors for example are used as pressure or acceleration sensors. Using a computer processor and algorithms, the location of the hand or an object held by it, may be determined. Other physical touch sensors technologies such as capacitive and resistive sensors are also widely used. The capacitive and resistive sensors tend to be placed on transparent layer on the side of display panel facing the user and are known to cause a certain degradation of the quality of the image displayed by the panel display. Other types of sensors configured to measure the aforementioned metrics of the physical touch event are also known.

Displays intended for use in harsh environments such as airborne platforms, military vehicles, and the like are affected by vibrations and shocks during normal operation. Consequently, any touch screen that is based on recognizing the actual contact or impact of a physical object with the display may be interfered by the aforementioned vibrations. It would be advantageous to provide a method or a device for validating a physical touch event in optical touch screen, in which a user has intentionally caused a physical touch event.

United States Patent number 6,504,530 B1 by Wilson, et al, discloses a method and apparatus for discriminating against false touches in a touchscreen system. The system is designed to confirm a touch registered by one touch sensor with another touch sensor, preferably of a different sensor type, prior to acting upon the touch (i.e., sending touch coordinates to the operating system).

European Patent Application number 2,482,164 A1 by DeLuca discloses an electronic device including a touch-sensitive display and a plurality of piezoelectric patch transducers disposed beneath the display. A controller is configured to switch each of the transducers between a tactile feedback mode to provide tactile feedback via the touch-sensitive display, and an object detection mode to provide acoustic detection of a contactless portion of an object relative to the device.

United States Patent Application number 2008/0024459 A1 by Poupyrev, et al, discloses an apparatus including a display section with a touch screen, the touch screen being adapted to display at least one graphical user interface object and detect a touch position on the touch screen. A pressure sensing unit is attached to the touch screen and adapted to detect pressure applied to the touch screen.

United States Patent Application number 2011/0181539 A1 by Tomotake Aono discloses input apparatus having an input unit for receiving a pressure input to an input object displayed on the display unit, a load detection unit for detecting a pressure load on the input unit, and a control unit for controlling to receive the pressure input if the pressure load satisfies a load standard.

### BRIEF SUMMARY

One aspect of the invention provides a hybrid optical-physical touch screen configured to distinguish between a touch event and other vibrations according to claim 1. A further aspect of the invention provides a method of validating an intentional physical touch event in an electronic panel display according to claim 10.

### BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout.

In the accompanying drawings:
Figure 1 is a perspective view showing the hybrid touch screen in accordance with the present invention;
Figure 2 shows several cross sections of the hybrid touch screen in accordance with the present invention; and
Figures 3A and 3B shows cross sections of yet another variation of the hybrid touch screen illustrating one aspect of the present invention.

The drawings together with the following detailed description make apparent to those skilled in the art how the invention may be embodied in practice.

### DETAILED DESCRIPTION

With specific reference now to the drawings in detail, it is stressed that the particulars shown are by way of example and for purposes of illustrative discussion of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before explaining the invention in detail, it is to be understood that the invention is not limited in its application to the details of construction and the arrangement of the components set forth in the following description or illustrated in the drawings.

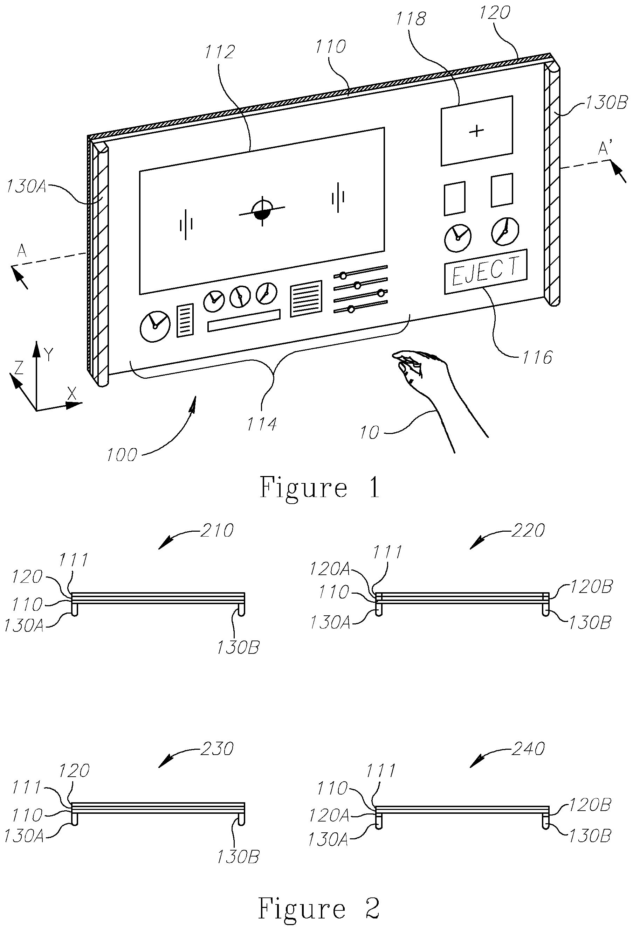

Figure 1 is a perspective view showing the hybrid touch screen 100 configured for validating intentional physical touch events by a user or physical objects held by the user, as opposed to non-touch events such as a stray object falling near the hybrid touch screen 100 or mechanical vibrations affecting the hybrid touch screen 100.

Hybrid optical-physical touch screen 100 includes an electronic panel display 110 and one or more optical sensors 130A and 130B coupled to electronic panel display 110 and configured to determine a spatial location of a physical object (such as a hand 10 of a user) on an X-Y plane near electronic panel display 110. Hybrid optical- physical touch screen 100 further includes a plurality of physical touch sensors 120 coupled to the electronic panel display 110 and configured to determine physical touch signals applied by the physical object to the electronic panel display 110.

Hybrid optical-physical touch screen 100 further includes a computer processor (not shown) configured to compare the determined spatial location of the physical object on the X-Y plane near the electronic panel display 110 with the determined level of physical touch signals applied by the physical object to the electronic panel display 110 at a same time, and determine, based on predefined parameters which may be updated or provided in real time, whether an intentional physical touch event between the physical object and the electronic panel display 110 has occurred.

As noted, the computer processor uses predefined parameters in determining the nature and also the actual occurrence of the touch event. Specifically, in some cases, even when a physical object is determined at a specified X-Y location, a touch event is not determined because a minimal level of physical touch signals that is associated with an intentional physical touch event by the physical object has not been measured by physical touch sensors 120. Advantageously, the use of physical touch sensors 120 as discussed herein is beneficial in reducing occurrences of premature detections of touch events that are due to the physical gap between the optical touch plane and the actual touch plane, when using optical sensors 130 alone.

The predefined parameters include a predefined set of ranges of level of physical touch signals, each range associated with a different X-Y location on the display. For example, an "Eject" button 116 may be activated if and only if a force of above 5kg is measured at its specified X-Y location.

Similarly, the portion of electronic panel display 110 which contain several functions 114 necessitates significantly lower levels of physical touch signals whereas zooming a sub screen such as 112 or 118 requires no physical touch signals at all. Once the position of the physical object is determined, the validation of the necessary force level is being validated based on either location or application functionality as being displayed at the specified X-Y location over electronic panel display 110.

Advantageously, in order to maintain a high quality image, physical touch sensors 120 are positioned along a circumference of the electronic display panel so as to not interfere with a viewable portion of the electronic panel display. Advantageously, the aforementioned logic may be implemented in other architectures to achieve the same effect of a method of validating a deliberate touch event in an optical touch screen. Such a method may include the following steps: detecting an X-Y position of a physical object facing the optical touch screen; obtaining physical touch signals affecting the electronic display panel; comparing the X-Y position with the obtained physical touch signals; and determining, based on the comparison and predefined parameters, whether a deliberate touch event by the physical object has occurred.

Figure 2 shows several cross sections along the A-A' axis of Figure 1 of the hybrid touch screen in accordance with the present invention. Touch screen configuration 210 illustrates electronic panel display 110, optical sensors 130, and a layer of physical touch sensors 120 located between electronic panel display 110 and a back light layer 111. Touch screen configuration 220 illustrates electronic panel display 110, optical sensors 130, and physical touch sensors 120A and 120B located only along the circumference of electronic panel display 110 between electronic panel display 110 and a back light layer 111 so as not to degrade the quality of the image.

Touch screen configuration 230 illustrates electronic panel display 110, optical sensors 130, and a layer of physical touch sensors 120 located behind a back light layer 111. In this configuration, a layer of resistive sensors 120 had been demonstrated by the inventor to be sufficiently sensitive to measure a physical touch event applied to the other side of the touch screen, i.e., to electronic panel display 110.

Touch screen configuration 240 illustrates electronic panel display 110, optical sensors 130, and physical touch sensors 120A and 120B located only along the circumference of electronic panel display 110 on its frontal side. It is understood that many other configurations are available. In all configurations discussed above, physical touch sensors 120 may be selected so as to measure a mechanical frequency of the electronic panel display 110. Measuring a mechanical frequency of over a specified threshold such as 10Hz may be indicative of mechanical vibrations. Conversely, measuring mechanical frequency of below 10Hz may be indicative of a physical touch event. Such physical touch sensors 120 may be implemented by piezoelectric sensors known in the art.

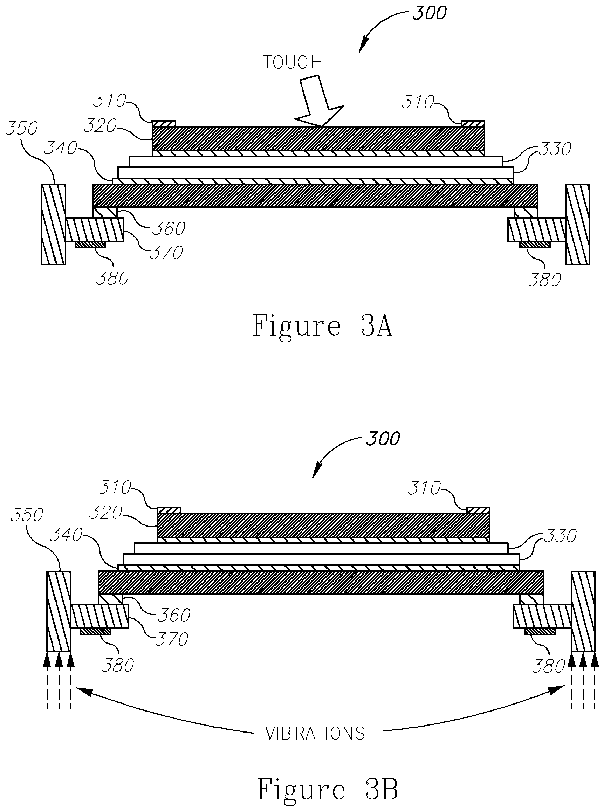

Figures 3A and 3B show cross sections of yet another variation of the hybrid touch screen illustrating one aspect of the present invention. In touch screen 300, the plurality of the physical touch sensors include at least one frontal physical touch sensor 310 physically coupled via a glass layer 320 to a side of the panel display 330 (e.g., LCD) facing a viewer and at least one rear physical touch sensor 380 physically coupled to frame elements 370, 350 located on the side of the panel display 330 opposite the viewer. Frame elements 370, 350 may be coupled to the display panel via visco-elastic polymer 360 that is usable for damping vibrations.

In a case of a physical touch event as shown in Figure 3A the outcome effect will propagate from the front panel through the damping material towards the mechanical support. Frontal physical touch sensors 310 will monitor stronger response than rear physical touch sensors 380. In a case of vibration/shock as shown in Figure 3B the shockwaves will propagate in the opposite direction, i.e., from the mechanical support and frame elements 350 and 370 through the damping material 360 towards the front panel. In this case rear physical touch sensors 380 array will monitor stronger response than frontal physical touch sensors 310 due to the damping.

By comparing the two responses by the computer processor a physical touch event can be differentiated from a mechanical vibration. The comparison can be based (but not limited to) on the peak amplitude, phase shift, time shift, signal shape, width and the like. The mathematical treatment of the comparison may include subtraction, dividing, transformation, logical operation, and the like.

It is understood that the aforementioned structure of touch screen 300 is presented here by way of example only. The same logic may be applied to different structures. A generalized method for differentiating a true touch event from vibrations may include the following stages: obtaining physical touch from a frontal side of the touch screen and from a rear side of the touch screen and comparing the physical touch signals coming from the frontal side of the touch screen with the physical touch signals coming from the rear side of the touch screen, so as to determine a spatial direction of a source of the mechanical impact. The method may further include the stage of determining an intentional touch event only in a case that the determined direction is the frontal side of the touch screen.

## Claims

1. A hybrid optical-physical touch screen (100, 300) for an airborne platform configured to distinguish between ambiance vibrations and a deliberate touch event, comprising:
an electronic panel display (110, 330);
one or more optical sensors (130A, 130B) coupled to the electronic panel display, parallel to the plane of the electronic panel display (110) but displaced from it, said one or more optical sensors (130A, 130B) being configured to determine, a spatial location X-Y of a physical object (10) in optical touch plane near the electronic panel display (110);
one or more touch sensors (120, 310, 380) coupled to the electronic panel display (110) and configured to determine a physical touch event between the physical object (10) and the electronic panel display (110); and,
a processor configured to compare the determined spatial location of the physical object (10) with the determined physical touch event between the physical object (10) and the display at a same time, and determine, based on predefined parameters which are updated in real-time and are associated with the spatial location X-Y, whether an intentional physical touch event between the physical object (10) and the electronic panel display (110) has occurred at the spatial location X-Y;
wherein the predefined parameters include a predefined set of ranges for the required level of physical force, each range associated with a different X-Y location on the display;
wherein at least one range is associated with a button having specified X-Y location on the display, the button requiring a higher level of force to be activated comparative to other locations on the display; and,
wherein the touch sensors (120, 310) are configured to measure a mechanical frequency level of the entire electronic panel display (110), wherein below a threshold value, the processor determines a physical touch event, and over a threshold value, the processor determines other vibrations.

2. The touch screen (100, 300) according to claim 1, wherein the touch sensors (120, 310, 380) comprise sensors which are sensitive to at least one of: force/pressure change, bending, deflection, shockwave, acoustic pulse/wave, and dispersive signal.

3. The touch screen (100, 300) according to claim 1, wherein the physical touch sensors (120, 310, 380) are positioned along a circumference of the electronic panel display (110, 330) so as to not interfere with a viewable portion of the electronic panel display (110, 330).

4. The touch screen (100, 300) according to claim 1, wherein the one or more touch sensors (120, 310, 380) further comprise at least one frontal touch sensor (310) physically coupled via a glass layer (320) to a side of the panel display (110, 330) facing a viewer and at least one rear touch sensor (380) physically coupled to frame elements (350, 370) located on the side of the panel display (110, 330) opposite the viewer.

5. The touch screen (100, 300) according to claim 4, wherein the processor is further configured to compare signals captured by the at least one frontal sensor (310) and the at least one rear sensor (380).

6. The touch screen (100, 300) according to claim 5, wherein the processor is further configured to differentiate a mechanical vibration from a physical touch event, based on the comparison.

7. The touch screen (100, 300) according to claim 5, wherein the processor is further configured to determine a spatial direction of a source of the physical touch, based on the comparison and the detected X-Y spatial location.

8. The touch screen (100, 300) according to any preceding claim, wherein the processor is configured to determine an intentional touch event only in case that the determined direction is the frontal side of the electronic panel display (110, 330).

9. A method of validating an intentional physical touch event in an electronic panel display (110, 330) for an airborne platform, the method comprising:
optically detecting an X-Y spatial position of a physical object (10) in an optical touch plane near the plane of the electronic panel display (110, 330);
obtaining touch signals from one or more touch sensors (120, 310, 380) coupled to the electronic panel display (110, 330);
comparing the X-Y position with the obtained physical touch signals; and,
determining, based on the comparison and predefined parameters which are updated in real-time and are associated with the X-Y spatial position, whether an intentional physical touch event between the physical object (10) and the electronic panel display (110, 330) has occurred at the X-Y spatial position,
wherein the predefined parameters include a predefined set of ranges for the required level of physical force, each range associated with a different X-Y location on the display;
wherein at least one range is associated with a button having specified X-Y location on the display, the button requiring a higher level of force to be activated comparative to other locations on the display; and,
wherein the touch sensors (120, 310, 380) are configured to measure a mechanical frequency level of the entire electronic panel display (110, 330), wherein over a threshold value the processor determines other vibrations, and below a threshold value, the processor determines a physical touch event.

## Patentansprüche

1. Hybrider optisch-physischer Touchscreen (100, 300) für eine Luftplattform, der dazu konfiguriert ist, zwischen Umgebungsschwingungen und einem beabsichtigten Berührungsereignis zu unterscheiden, Folgendes umfassend:
ein elektronisches Bedienfeld-Display (110, 330);
einen oder mehrere optische Sensoren (130A, 130B), der oder die parallel zu der Ebene des elektronischen Bedienfeld-Displays (110) jedoch von diesem versetzt mit dem elektronischen Bedienfeld-Display gekoppelt ist oder sind, wobei der eine optische Sensor oder die mehreren optischen Sensoren dazu konfiguriert ist oder sind, einen Raumort X-Y eines physischen Objekts (10) in einer optischen Berührungsebene nahe dem elektronischen Bedienfeld-Display (110) zu bestimmen;
einen oder mehrere Berührungssensoren (120, 310, 380), der oder die mit dem elektronischen Bedienfeld-Display (110) gekoppelt und dazu konfiguriert ist oder sind, ein physisches Berührungsereignis zwischen dem physischen Objekt (10) und dem elektronischen Bedienfeld-Display (100) bestimmen; und
einen Prozessor, der dazu konfiguriert ist, den bestimmten Raumort des physischen Objekts (10) mit dem bestimmten physischen Berührungsereignis zwischen dem physischen Objekt (10) und dem Display zu einer gleichen Zeit und aufgrund von vordefinierten Parametern, die in Echtzeit aktualisiert werden und mit dem Raumort X-Y assoziiert sind, zu vergleichen und zu bestimmen, ob ein absichtliches Berührungsereignis zwischen dem physischen Objekt (10) und dem elektronischen Bedienfeld-Display (110) an dem Raumort X-Y stattgefunden hat;
wobei die vordefinierten Parameter einen vordefinierten Satz von Bereichen für das erforderliche Maß körperlicher Kraftaufwendung beinhalten, wobei jeder Bereich mit einem verschiedenen Ort X-Y auf dem Bedienfeld-Display assoziiert ist;
wobei mindestens ein Bereich mit einer Schaltfläche, die einen festgelegten Ort X-Y auf dem Bedienfeld-Display hat, assoziiert ist und die Schaltfläche im Vergleich zu anderen Orten auf dem Display ein höheres Maß an Kraftaufwendung erfordert, um aktiviert zu werden; und,
wobei die Berührungssensoren (120, 310) dazu konfiguriert sind, eine mechanische Frequenzstufe des gesamten elektronischen Bedienfeld-Displays (110) zu messen, wobei der Prozessor unterhalb eines Schwellenwerts ein physisches Berührungsereignis und oberhalb eines Schwellenwerts andere Schwingungen bestimmt.

2. Touchscreen (100, 300) nach Anspruch 1, wobei die Berührungssensoren (120, 310, 380) Sensoren umfassen, die mindestens für eines von Folgendem empfindlich sind: Kraft/Druckänderung, Verbiegen, Auslenkung, Schockwelle, akustische(r) Puls/Welle und dispersives Signal.

3. Touchscreen (100, 300) nach Anspruch 1, wobei die physischen Berührungssensoren (120, 310, 380) entlang einem Umfang des elektronischen Bedienfeld-Displays (110, 330) angeordnet sind, damit sie nicht einen sichtbaren Anteil des elektronischen Bedienfeld-Displays (110, 330) beeinträchtigen.

4. Touchscreen (100, 300) nach Anspruch 1, wobei der eine oder die mehreren Sensoren (120, 310, 380) ferner mindestens einen vorderen Berührungssensor (310), der physisch über eine Glasschicht (320) mit einer einem Viewer zugewendeten Seite des Bedienfeld-Displays (110, 330) gekoppelt ist, und mindestens einen hinteren Berührungssensor (380), der physisch mit Rahmenelementen (350, 370), die sich auf der dem Viewer gegenüber liegenden Seite des Bedienfeld-Displays (110, 330) befinden, gekoppelt ist, umfasst oder umfassen.

5. Touchscreen (100, 300) nach Anspruch 4, wobei der Prozessor ferner dazu konfiguriert ist, die Signale, die von dem mindestens einen vorderen Sensor (310) und dem mindestens einen hinteren Sensor (380) erfasst werden, zu vergleichen.

6. Touchscreen (100, 300) nach Anspruch 5, wobei der Prozessor ferner dazu konfiguriert ist, aufgrund des Vergleiches eine mechanische Schwingung von einem physischen Berührungsereignis zu unterscheiden.

7. Touchscreen (100, 300) nach Anspruch 5, wobei der Prozessor ferner dazu konfiguriert ist, aufgrund des Vergleiches und dem erfassten Raumort X-Y eine Raumrichtung einer Quelle der physischen Berührung zu bestimmen.

8. Touchscreen (100, 300) nach einem der vorhergehenden Ansprüche, wobei der Prozessor dazu konfiguriert ist, ein absichtliches Berührungsereignis nur in dem Fall zu bestimmen, wenn die bestimmte Richtung die vordere Seite des elektronischen Bedienfeld-Displays (110, 330) ist.

9. Verfahren zum Validieren eines absichtlichen Berührungsereignisses an einem elektronischen Bedienfeld-Display für eine Luftplattform, wobei das Verfahren Folgendes umfasst:
optisches Erfassen einer Raumposition X-Y eines physischen Objekts (10) in einer optischen Berührungsebene nahe dem elektronischen Bedienfeld-Display (110, 330);
Erhalten von Berührungssignalen von einem oder mehreren Sensoren (120, 310, 380), die mit dem elektronischen Bedienfeld-Display (110, 330) gekoppelt sind;
Vergleichen der Position X-Y mit den erhaltenen Berührungssignalen; und,
Bestimmen aufgrund von dem Vergleich und vordefinierten Parametern, die in Echtzeit aktualisiert werden und mit der Raumposition X-Y assoziiert sind, ob ein beabsichtigtes physisches Berührungsereignis zwischen dem physischen Objekt (10) und dem elektronischen Bedienfeld-Display (110, 330) an der Raumposition X-Y stattgefunden hat,
wobei die vordefinierten Parameter einen vordefinierten Satz von Bereichen für das erforderliche Maß körperlicher Kraftaufwendung einschließen, wobei jeder Bereich mit einem anderen Ort X-Y auf dem Anzeigefeld assoziiert ist;
wobei mindestens ein Bereich mit einer Schaltfläche, die einen festgelegten Ort X-Y auf dem Anzeigefeld hat, assoziiert ist, die ein höheres Maß an Kraftaufwendung im Vergleich zu anderen Orten auf dem Anzeigefeld erfordert, um aktiviert zu werden; und
wobei die Berührungssensoren (120, 310, 380) dazu konfiguriert sind, eine mechanische Frequenzstufe des gesamten elektronischen Bedienfeld-Displays (110, 330) zu messen, wobei der Prozessor oberhalb eines Schwellenwertes andere Schwingungen und unterhalb eines Schwellenwertes ein beabsichtigtes physisches Berührungsereignis bestimmt.

## Revendications

1. Écran tactile hybride optique-physique (100, 300) pour une plateforme aéroportée, configuré pour faire la distinction entre des vibrations d'ambiance et un événement tactile délibéré, comprenant :
un panneau d'affichage électronique (110, 330) ;
un ou plusieurs capteurs optiques (130A, 130B) couplé(s) à un affichage électronique, parallèle au plan du panneau d'affichage électronique (110) mais décalé par rapport à celui-ci, lesdits un ou plusieurs capteurs optiques (130A, 130B) étant configurés pour déterminer un emplacement spatial X-Y d'un objet physique (10) dans le plan tactile optique à proximité du panneau d'affichage électronique (110) ;
un ou plusieurs capteurs tactiles (120, 310, 380) couplés au panneau d'affichage électronique (110) et configurés pour déterminer un événement tactile physique entre l'objet physique (10) et le panneau d'affichage électronique (110) ; et
un processeur configuré pour comparer l'emplacement spatial déterminé de l'objet physique (10) à l'événement tactile physique déterminé entre l'objet physique (10) et l'affichage en même temps, et pour déterminer, en fonction de paramètres prédéfinis qui sont mis à jour en temps réel et sont associés à l'emplacement spatial X-Y, si un événement tactile physique intentionnel entre l'objet physique (10) et le panneau d'affichage électronique (110) s'est produit à l'emplacement spatial X-Y ;
dans lequel les paramètres prédéfinis comprennent un ensemble prédéfini de plages pour le niveau requis de force physique, chaque plage étant associée à un emplacement X-Y différent sur l'affichage ;
dans lequel au moins une plage est associée à un bouton ayant un emplacement X-Y spécifié sur l'affichage, le bouton nécessitant un niveau de force plus élevé pour être activé par rapport à d'autres emplacements sur l'affichage ; et
dans lequel les capteurs tactiles (120, 310) sont configurés pour mesurer un niveau de fréquence mécanique de l'ensemble du panneau d'affichage électronique (110), dans lequel, au-dessous d'une valeur de seuil, le processeur détermine un événement tactile physique, et, au-dessus d'une valeur de seuil, le processeur détermine d'autres vibrations.

2. Écran tactile (100, 300) selon la revendication 1, dans lequel les capteurs tactiles (120, 310, 380) comprennent des capteurs qui sont sensibles à au moins l'un des éléments suivants : un changement de force/pression, une flexion, une déviation, une onde de choc, une impulsion/onde acoustique et un signal dispersif.

3. Écran tactile (100, 300) selon la revendication 1, dans lequel les capteurs tactiles physiques (120, 310, 380) sont positionnés le long d'une circonférence du panneau d'affichage électronique (110, 330) de manière à ne pas interférer avec une partie visible du panneau d'affichage électronique (110, 330).

4. Écran tactile (100, 300) selon la revendication 1, dans lequel l'un ou plusieurs capteurs tactiles (120, 310, 380) comprennent en outre au moins un capteur tactile frontal (310) physiquement couplé via une couche de verre (320) à un côté du panneau d'affichage (110, 330) faisant face à un spectateur, et au moins un capteur tactile arrière (380), physiquement couplé à des éléments de cadre (350, 370) situés sur le côté du panneau d'affichage (110, 330) opposé au spectateur.

5. Écran tactile (100, 300) selon la revendication 4, dans lequel le processeur est en outre configuré pour comparer des signaux capturés par l'au moins un capteur frontal (310) et l'au moins un capteur arrière (380).

6. Écran tactile (100, 300) selon la revendication 5, dans lequel le processeur est en outre configuré pour différencier une vibration mécanique d'un événement tactile physique, en fonction de leur comparaison.

7. Écran tactile (100, 300) selon la revendication 5, dans lequel le processeur est en outre configuré pour déterminer une direction spatiale d'une source du toucher physique, en fonction de la comparaison et de l'emplacement spatial X-Y détecté.

8. Écran tactile (100, 300) selon l'une quelconque des revendications précédentes, dans lequel le processeur est configuré pour déterminer un événement tactile intentionnel uniquement dans le cas où la direction déterminée est le côté frontal du panneau d'affichage électronique (110, 330).

9. Procédé de validation d'un événement tactile physique intentionnel dans un panneau d'affichage électronique (110, 330) pour une plateforme aéroportée, le procédé consistant à :
détecter optiquement une position spatiale -Y d'un objet physique (10) dans un plan tactile optique à proximité du plan du panneau d'affichage électronique (110, 330) ;
obtenir des signaux tactiles à partir d'un ou plusieurs capteurs tactiles (120, 310, 380) couplés au panneau d'affichage électronique (110, 330) ;
comparer la position X-Y aux signaux tactiles physiques obtenus ; et
déterminer, en fonction de la comparaison et des paramètres prédéfinis qui sont mis à jour en temps réel et sont associés à la position spatiale X-Y, si un événement tactile physique intentionnel entre l'objet physique (10) et le panneau d'affichage électronique (110, 330) s'est produit à la position spatiale X-Y, les paramètres prédéfinis comprenant un ensemble prédéfini de plages pour le niveau requis de force physique, chaque plage étant associée à un emplacement X-Y différent sur l'affichage ;
dans lequel au moins une plage est associée à un bouton ayant un emplacement X-Y spécifié sur l'affichage, le bouton nécessitant un niveau de force plus élevé pour être activé par rapport à d'autres emplacements sur l'affichage ; et
dans lequel les capteurs tactiles (120, 310, 380) sont configurés pour mesurer un niveau de fréquence mécanique de l'ensemble du panneau d'affichage électronique (110, 330), dans lequel au-dessus d'une valeur de seuil, le processeur détermine d'autres vibrations, et au-dessous d'une valeur de seuil, le processeur détermine un événement tactile physique.
